# EUROPÄISCHE PATENTSCHRIFT

(11) **EP 2 845 700 B1**
(45) Veröffentlichungstag und Bekanntmachung des Hinweises auf die Patenterteilung: **22.06.2016**
(21) Anmeldenummer: 14183594.2
(22) Anmeldetag: 04.09.2014
(51) Int. Cl.: B26B 17/00, B26F 3/00

(54) **Zange zum Abtrennen von Schokoladenstücken**
Clippers for separating chocolate pieces
Pince destinée à séparer des morceaux de chocolat

(30) Priorität: 06.09.2013 DE 202013104051 U
(43) Veröffentlichungstag der Anmeldung: 11.03.2015
(73) Patentinhaber: Rütjes, Thomas, 12305 Berlin (DE)
(72) Erfinder: Rütjes, Thomas, 12305 Berlin (DE)
(74) Vertreter: Hertin und Partner Rechts- und Patentanwälte PartG mbB

(56) Entgegenhaltungen:
- DE-U1-202006 019 957
- FR-A- 742 229
- US-A1- 2009 308 211
- US-A1- 2011 289 784
- US-A1- 2013 183 631

## Beschreibung

Die Erfindung betrifft eine Zange zum Abtrennen von Schokoladenstücken aus einem Verbund von Schokoladenstücken, insbesondere einer sogenannten Toblerone-Schokolade.

Hintergrund und Ausgangspunkt der vorliegenden Erfindung ist die sogenannte TOBLERONE, die berühmteste Schweizer Schokolade. Diese Schokolade zeichnet sich insbesondere durch Ihre ganz spezielle und typische Form aus. Die Toblerone wurde im Jahr 1908 von den Schweizer Chocolatiers Theodor Tobler und Emil Baumann erfunden. Der Name "Toblerone" ist eine Zusammensetzung aus "Tobler" und "Torrone", dem italienischen Namen für Honig-Mandel-Nougat.

Charakteristisches Merkmal einer solchen Schokolade ist deren dreieckige Form. Über die dreieckige Form dieser Schokolade gibt es verschiedene Legenden. Vielfach wird angenommen, dass Theodor Tobler sich von den Schweizer Bergen, insbesondere der charakteristischen Silhouette des Matterhorns mit seiner typischen Dreiecksform hatte inspirieren lassen. Genaueres ist nicht bekannt und spielt vorliegend auch keine entscheidende Rolle. Zumindest gehört heutzutage die Toblerone zu den bekanntesten Süßwarenprodukten weltweit. 1969 wurde erstmals neben der klassischen Toblerone in verschiedenen Größen ein weiteres Toblerone-Produkt eingeführt, nämlich die Schwarze Toblerone (inzwischen Toblerone Dunkel genannt). 1973 folgte die weiße, in den 1990er Jahren die blaue, 2008 die lila Toblerone «Fruit & Nut» mit Weinbeeren und 2009 die Sorte "Honey & Crisp".

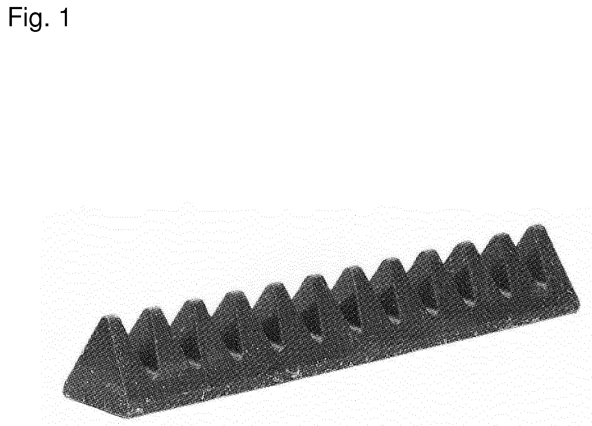

Üblicherweise hat aber jede dieser Toblerone-Variationen die klassische Form, nämlich die Form eines Schokoladenriegels mit einzelnen voneinander separierten dreieckigen - genauer gesagt: prismenförmigen - Schokoladenstücken, die an einer Basis miteinander verbunden sind. Figur 1 zeigt als Abbildung zum Stand der Technik eine übliche Form einer Toblerone-Schokolade, die in unterschiedlichen Größen auf dem Markt angeboten werden. Die Form einer solchen Schokolade ist als dreidimensionale Gemeinschaftsmarke unter CTM 000031237 registriert.

Der Konsument bricht üblicherweise einen "Zacken" bzw. eben ein Schokoladenstück vom Gesamtriegel ab, damit er ihn verzehren kann. Ein "Abbeißen" vom Riegel kommt nicht in Betracht; dies vor allem deswegen, weil die Schokolade sehr hart ist, das Schokoladenstück darüber sperrig und durch seine dreieckige, prismenförmige Form kaum vom Schokoladenverbund abzubeißen ist. Darüber hinaus muss dann das Schokoladenstück noch zerbissen oder zumindest zerkleinert werden.

Das Problem beim Abtrennen eines Schokoladenstücks einer derartigen Formgebung besteht darin, dass der Konsument in aller Regel schmutzige, schokoladenverklebte Hände und Finger hat, da schon ein gewisser Kraftaufwand erforderlich ist, um überhaupt ein prismenförmiges Schokoladenstück vom Gesamtriegel abzubrechen. Dies ist auch deswegen der Fall, weil die Körperwärme der Hände die Schokolade entsprechend erweicht und damit auch teilweise etwas unhandlich, weil rutschig, macht.

Hierbei ist vor allem darauf hinzuweisen, dass das Besondere an einer derartigen "Toblerone" eben die dreidimensionale Form als solche ist. Die meisten Schokoladen sind planar, d.h. quasi zweidimensional, was ein Abbrechen von einzelnen Schokoladenstücken durch die entsprechende Hebelwirkung einfacher macht. Bei einer Toblerone ist es jedoch häufig der Fall, dass der Konsument buchstäblich Hammer und Meißel verwendet, um ein prismenförmiges Schokoladenstück vom Schokoladenverbund abzutrennen.

Für planare bzw. quasi zweidimensionale Schokoladen sind im Stand der Technik Vorrichtungen zu finden, mit denen diese Schokoladentafeln mechanisch durchgebrochen werden können. GB 2270248 beschreibt eine Vorrichtung zum Brechen von Süßwaren insbesondere Schokoladentafeln. Die Vorrichtung umfasst zwei Gehäuseteile, in die eine Schokoladentafel eingebracht werden kann. Die beiden Gehäuseteile sind biegsam miteinander verbunden und durch das Biegen der Gehäuseteile wird die in die Gehäuseteile eingebrachte Schokoladentafel gebrochen. Die Vorrichtung in GB 2270248 eignet sich für nahezu planare (flache, ebene) Schokoladentafeln mit einer etwa gleich großen Ober- und Unterseite. Zudem muss die ebene bzw. quasi planare Fläche der Schokoladentafel auf der Ober- und Unterseite ausreichend groß sein, damit über die Vorrichtung in GB 2270248 eine Biegekraft auf die Schokoladenfläche einwirken kann und so zum Brechen der Schokoladentafel führt. Für einen Schokoladenverbund, bei dem die abzutrennenden Schokoladenstücke zackenartig, dreidimensional räumlich in die Höhe ragen und beispielsweise einen Verbund aus prismenförmigen Schokoladenstücken darstellen, wie insbesondere bei einer Toblerone-Schokolade, ist die Vorrichtung in GB 2270248 nicht geeignet, um Schokoladenstücke abzutrennen.

In IT 1200532 ist eine Vorrichtung beschrieben, welche ähnlich wie ein Gerät für Heftklammern aussieht. Die Vorrichtung weist zwei ebene Flächen auf, wovon eine Fläche die Auflagefläche darstellt. Die zweite Fläche ist mit der ersten Fläche an einer Seite biegsam über eine Blattfeder verbunden. Dadurch ist es möglich, die beiden Flächen federartig zusammenzudrücken. In das offene Ende der Vorrichtung kann eine Schokoladentafel eingelegt werden. Wird von oben auf die zweite, biegsam verbundene Fläche gedrückt, kann über eine zackenartige Schiene, welche am offenen Ende der zweiten Fläche befestigt ist, ein Schokoladenstück abgetrennt werden. Auch die Vorrichtung in IT 1200532 ist dafür vorgesehen, Stücke von planaren (flachen, ebenen) Schokoladentafeln abzutrennen. Es ist damit nicht möglich, zackenförmig, dreidimensional räumlich in die Höhe ragende Stücke von einen quasi prismenförmigen Schokoladenverbund abzutrennen.

Das Dokument DE 20 2006 019957 U1 offenbart eine zum Abtrennen von Schokoladenstücken geeignete Zange.

Ausgehend von diesem Stand der Technik ist es die Aufgabe der vorliegenden Erfindung, eine Einrichtung zum Abtrennen von prismenförmigen Schokoladenstücken von einem Schokoladenverbund von der typischen dreidimensionalen Formgebung einer Toblerone-Schokolade zur Verfügung zu stellen.

Gelöst wird diese Aufgabe durch die Merkmale der unabhängigen Ansprüche, insbesondere des Anspruchs 1. Die Erfindung stellt zu diesem Zweck eine Zange zur Verfügung.

Erfindungsgemäß ist danach eine Zange zum Abtrennen von Schokoladenstücken vorgesehen, insbesondere von quasi prismenförmigen Schokoladenstücken einer Toblerone, umfassend zwei manuell betätigbare Zangenschenkel und wenigstens ein Verbindungsgelenk, wobei die Zange einen Zangenkopf mit wenigstens drei Zangenbacken umfasst, und wobei die erste Zangenbacke aktiv ausgestaltet ist und eine Formgebung zur Erzeugung einer Sollbruchstelle zwischen hintereinander zu einem Schokoladenverbund angeordneten quasi prismenförmigen Schokoladenstücken aufweist und die zweite Zangenbacke passiv ausgestaltet ist, als Gegenstück zur ersten Zangenbacke, und das abzutrennende Schokoladenstück durch das Zusammenwirken der Zangenbacken vom verbleibenden Schokoladenverbund abgehebelt wird.

Bevorzugt ist, dass bei der Zange zum Abtrennen eines Schokoladenstückes die Zangenschenkel in dem Verbindungsgelenk gelenkig miteinander verbunden sind. Es ist bevorzugt, dass die beiden Zangenschenkel mit wenigstens einem Federelement miteinander verbunden sind, gegen dessen Federkraft die Zange zu bewegen ist und welches die Zange nach Zusammendrücken wieder öffnet. Insbesondere sind die Zangenschenkel sowohl gelenkig als auch mit Federelementen miteinander verbunden. Letztere dienen dazu, die Zange wieder zu öffnen, nachdem diese gegen die Federkraft die Zange zu bewegt wurde.

Erfindungsgemäß ist vorgesehen, dass eine der Zangenbacken (vorzugsweise die zweite Zangenbacke) eine Aufnahmeeinheit zur Aufnahme des abgetrennten Schokoladenstücks umfasst. Mit einer derartigen Vorrichtung lässt sich ein Schokoladenstück bzw. Schokoladenrippe einer Toblerone abkneifen bzw. vom Schokoladenverbund abhebeln. Das abgetrennte Schokoladenstück fällt auf die Aufnahmeeinheit und kann entnommen werden.

In einer weiteren Ausführungsform ist die dritte Zangenbacke als Pressstempel ausgebildet, die das abgetrennte Schokoladenstück aus der Zange auswirft. Auch in diesem Fall sind die drei Zangenbacken gelenkig mit den Zangenschenkeln verbunden. Der Zangenkopf der Zange umfasst damit vorzugsweise drei Zangenbacken, welche gelenkig mit den Zangenschenkeln verbunden sind. Beispielsweise ist der drei Zangenbacken umfassende Zangenkopf der Zange über eine Verbindungsstange und vier Verbindungsgelenke mit den Zangenschenkeln gelenkig verbunden.

Vorzugsweise ist in den Ausführungsformen vorgesehen, dass der die beispielsweise drei Zangenbacken umfassende Zangenkopf der Zange über eine Verbindungsstange, Verbindungsgelenke, Kulisse, Drehpunkte und/oder Rollen mit den Zangenschenkeln gelenkig verbunden ist. Die Grundausstattung der Zange umfasst vorzugsweise Zangenschenkel, Verbindungsgelenk und Zangenkopf. Bevorzugt ist, dass die Zange nach dem Hebelprinzip funktioniert. Insbesondere zwei Zangenschenkel stellen das vom Verbindungsgelenk ausgehend hintere Ende der Zange dar und werden über die an den Zangenschenkeln befindlichen Griffe zusammengedrückt. Dadurch wird eine Kraft erzeugt und auf den Zangenkopf übertragen. Der Zangenkopf umfasst die Zangenbacken, welche ausgehend vom Verbindungsgelenk das vordere Ende der Zange darstellen. Über die Zangenbacken wiederum wird die beim Zusammendrücken der Zangenschenkel erzeugte Kraft beispielsweise über eine greifartige Bewegung auf den Schokoladenverbund, welcher auch als Schokoladenriegel bezeichnet werden kann, übertragen.

Es ist bevorzugt, dass die Zange eine Kulisse umfasst. Eine Kulisse stellt generell ein Getriebeelement zur Kraftübertragung dar. Die Kulisse ermöglicht über eine Kulissenführung insbesondere, dass ein bestimmter Bewegungsablauf der Zangenbacken beim Zusammendrücken der Zangenschenkel erfolgt. Die Kulisse ist insbesondere eine Gleitbahn, in der Rollen eingreifen und von der Kulissenbahn zwangsgeführt werden. Die Kulisse weist beispielsweise einen Schlitz, einen Steg oder eine Nut als Kulissenbahn auf, um eine Bewegung der Kulisse in eine Bewegung der in der Kulissenbahn befindlichen Rolle umzusetzen. Die Übertragungsfunktion der Kulissenführung wird ausschließlich durch den Verlauf des Schlitzes, des Steges oder der Nut bestimmt und ist in weiten Grenzen frei wählbar. Über die Kulissenführung können insbesondere komplexe Bewegungen insbesondere der Zangenbacken realisiert werden.

Erfindungsgemäß ist insbesondere vorgesehen, dass in der Aufnahmeeinheit der zweiten Zangenbacke eine Schneideeinheit angeordnet ist. Vorzugsweise umfasst die zweite Zangenbacke, in welcher insbesondere die Schneideeinheit angeordnet ist, ebenso auch Öffnungen. Über eine Hebelbewegung beim Zusammendrücken der Zangenschenkel wirken die zweite, insbesondere passiv ausgestaltete Zangenbacke, welche auch als bewegliche Zangenbacke bezeichnet werden kann, und die dritte, vorzugsweise mit einem Pressstempel versehene Zangenbacke zusammen und zerteilen das in der Aufnahmeeinheit befindliche Schokoladenstück. Hierzu drückt der Pressstempel das Schokoladenstück auf und durch die Schneideeinheit, so dass dieses zerteilt wird. Zu diesem Zweck weist sowohl die Aufnahmeeinheit eine korrespondierende Form zu dem abgetrennten Schokoladenstück auf, als auch der Pressstempel eine korrespondierende Form zur Aufnahmeeinheit. Vorzugsweise wirken der Pressstempel und die Schneideeinheit zum Zerteilen des in der Aufnahmeeinheit befindlichen Schokoladenstückes zusammen. Der Pressstempel hat insbesondere die Funktion eines Ausdrückkopfes und kann auch als Auswerfkopf bezeichnet werden. Der Pressstempel ist insbesondere an der dritten Zangenbacke angebracht. Die dritte Zangenbacke ist beispielsweise gebogen ausgestaltet, umfasst einen Griff und ist insbesondere als Ausdrücker oder Auswerfer zu bezeichnen, da diesem Zangenbauteil die Funktion des Ausdrückens bzw. Auswerfens eines abgetrennten Schokoladenstücks aus der Zange zukommt.

Im Ergebnis kann mit einer Handbewegung beim Zusammendrücken der erfindungsgemäßen Zange einerseits ein Schokoladenstück von der prismenförmigen Gestalt einer Toblerone-Schokolade vom Schokoladenverbund abgetrennt werden, und andererseits kann ggf. bei Verwendung der Schneideinheit und des Pressstempels dieses Schokoladenstück gleichzeitig zerkleinert werden.

In einer besonderen Ausführungsform betrifft die Erfindung eine Zange zum Zerteilen von Schokoladenstücken, insbesondere von quasi prismenförmigen Schokoladenstücken einer Toblerone, umfassend zwei manuell betätigbare Zangenschenkel und wenigstens ein Verbindungsgelenk, wobei die Zange einen Zangenkopf mit zwei Zangenbacken umfasst, und wobei die Zangenbacke aktiv ausgestaltet ist und einen Pressstempel aufweist, über welchen ein sich in der Aufnahmeeinheit der passiv ausgestalteten Zangenbacke befindliches Schokoladenstück zum Zerteilen durch die Schneideeinheit gepresst wird. Mit einer solchen Zange wird ein bereits von einem Toblerone-Verbund abgetrenntes Schokoladenstück auch in mundgerechte Stücke zerteilt.

Die Erfindung betrifft auch einen Kit für eine Zange zum Abtrennen und/oder Zerteilen von Schokoladenstücken, insbesondere von quasi prismenförmigen Schokoladenstücken einer Toblerone, wobei es hierzu insbesondere erfindungsgemäß vorgesehen ist, dass der Zangenkopf modular aufgebaut ist, eine passiv ausgestaltete Zangenbacke und eine oder zwei aktiv ausgestaltete Zangenbacken umfasst, wobei die Zangenbacken auswechselbar sind. Der Benutzer kann sich also "seine" Zange selbst zusammenbauen, indem er die eine oder andere Komponente, beispielsweise die Schneideeinheit zum Zerteilen des abgetrennten Schokoladenstücks, weglässt. Zumindest sollte eine passiv ausgestaltete Zangenbacke und eine oder zwei aktiv ausgestaltete Zangenbacken vorhanden sein, wobei die Zangenbacken auswechselbar ausgestaltet sind. Der Vorteil der modularen Ausgestaltung der Zange liegt darin, dass die Zangenbacken, beispielsweise die Aufnahmeeinheit und der Pressstempel, an die Größe des vom Schokoladenverbund abzutrennenden und/oder in mundgerechte Stücke zu zerteilenden Schokoladenstücks der Toblerone-Schokolade angepasst werden kann.

Weitere vorteilhafte Maßnahmen sind in den übrigen Unteransprüchen beschrieben; die Erfindung wird anhand von Ausführungsbeispielen und der nachfolgenden Figuren näher beschrieben; alternative Ausführungsformen sind denkbar und nicht ausgeschlossen; es zeigt:
- Figur 1: eine Toblerone-Schokolade nach dem Stand der Technik, hier die Abbildung der registrierten dreidimensionalen Marke CTM 000031237;
- Figur 2a / 2b: Zange zum Abtrennen von Schokoladenstücken, insbesondere von quasi prismenförmigen Schokoladenstücken einer Toblerone in geschlossenem (2a) und geöffnetem (2b) Zustand, jeweils in Seitenansicht;
- Figur 3a: Draufsicht auf einen Zangenschenkel mit Zangenbacke und Schneideeinheit;
- Figur 3b: Draufsicht auf einen Zangenschenkel mit Formgebung der ersten Zangenbacke 18 zur Erzeugung einer Sollbruchstelle;
- Figur 3c: Draufsicht auf die dritte Zangenbacke 20 mit Pressstempel;
- Figur 4: perspektivische Seitenansicht von schräg oben auf die Zange in geöffnetem Zustand;
- Figur 5: Seitenansicht von links auf die Zange in geöffnetem Zustand;
- Figur 6: Seitenansicht von links auf die Zange in geschlossenem Zustand;
- Figur 7a: Seitenansicht von rechts auf die Zange in der Ausgangsposition bevor ein Schokoladenstück vom Schokoladenriegel abgetrennt wurde;
- Figur 7b: Seitenansicht von rechts auf die Zange in der Position nachdem ein Schokoladenstück vom Schokoladenriegel abgetrennt wurde;
- Figur 8a: Seitenansicht von rechts auf die Zange in der Position, bei der sich das abgetrennte Schokoladenstück in der Aufnahmeeinheit befindet, bevor es in kleinere Stücke zerteilt und aus der Zange ausgedrückt wird;
- Figur 8b: Seitenansicht von rechts auf die Zange in der Position, bei der das abgetrennte Schokoladenstück von der dritten Zangenbacke mit dem Pressstempel aus der Zange gedrückt wurde;
- Figur 9: Seitenansicht von rechts auf einen Teilbereich der Zange, der die Kulisse umfasst;
- Figur 10a und 10c: Seitenansicht von rechts auf einen Teilbereich der Zange, der den Pressstempel in Kontakt mit einem abgetrennten Schokoladenstück (Anfangsrippe) zeigt;
- Figur 10b und 10d: Seitenansicht von rechts auf einen Teilbereich der Zange, der den Pressstempel in Kontakt mit einem abgetrennten Schokoladenstück (mittlere Rippe) zeigt;
- Figur 11a und 11b: Positionierung des Schokoladenriegels bzw. des abgetrennten Schokoladenstücks auf der Auflage der Zange;
- Figur 12a und 12b: Formgebung zum Abtrennen von Schokoladenstücken und Schneideeinheit zum Zerteilen von abgetrennten Schokoladenstücken;
- Figur 13a: erste, aktiv ausgestaltete, bewegliche Zangenbacke und Zangenschenkel;
- Figur 13b: zweite, passiv ausgestaltete, feststehende Zangenbacke und Zangenschenkel;
- Figur 14: Seitenansicht von links auf die Zange in geschlossenem Zustand mit Zuhaltung, die die Zange in geschlossenem Zustand hält.

Figur 1 zeigt eine Toblerone-Schokolade nach dem Stand der Technik, nämlich die Abbildung der registrierten dreidimensionalen Marke CTM 000031237. Erkennbar sind die prismenförmigen Schokoladenstücke, die über eine gemeinsame Schokoladenbasis an der Unterseite zu einem Schokoladenverbund miteinander verbunden sind. Die quasi prismenförmigen Schokoladenstücke, auch als Schokoladenrippen zu bezeichnen, weisen insbesondere eine dreieckige Form auf, sind beispielsweise zackenartig und ragen dreidimensional in die Höhe. Üblicherweise bricht der Konsument das äußerste der Schokoladenstücke zum Verzehr ab. Mit Mund und Zähnen ist ein solches Schokoladenstück in aller Regel nicht abzutrennen. Bei größeren Schokoladen dieser Art werden häufig mechanische Hilfsmittel wie Hammer und Meißel zum Abtrennen verwendet.

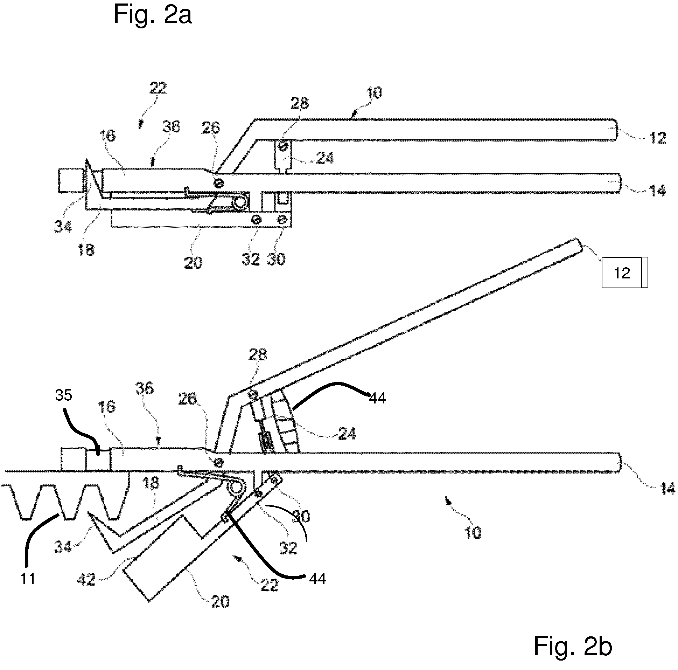

Figuren 2a und 2b zeigen eine erfindungsgemäße Zange zum Abtrennen von Schokoladenstücken, insbesondere von quasi prismenförmigen Schokoladenstücken einer Toblerone in geschlossenem (2a) und geöffnetem (2b) Zustand, jeweils in Seitenansicht.

Die Zange 10 umfasst zwei manuell betätigbare Zangenschenkel 12 und 14, sowie wenigstens ein Verbindungsgelenk 26, ferner einen Zangenkopf 22 mit wenigstens zwei Zangenbacken 16 und 18. Die erste Zangenbacke 18 ist aktiv ausgestaltet und weißt eine Formgebung 34 zur Erzeugung einer Sollbruchstelle zwischen hintereinander zu einem Schokoladenverbund angeordneten quasi prismenförmigen Schokoladenstücken 11 auf und die zweite Zangenbacke 16 ist passiv ausgestaltet, als Gegenstück zur ersten Zangenbacke 18. Durch Zusammenwirken der Zangenbacken 16 und 18 wird ein Schokoladenstück vom verbleibenden Schokoladenverbund 11 abgehebelt. Zu diesem Zweck sind die Zangenschenkel über ein Verbindungsgelenk 26 gelenkig miteinander verbunden.

Die beiden Zangenschenkel 12 und 14 sind ferner vorzugsweise mit einem Federelement 44 miteinander verbunden, gegen dessen Federkraft die Zange zu bewegen ist und welches die Zange nach Zusammendrücken wieder öffnet.

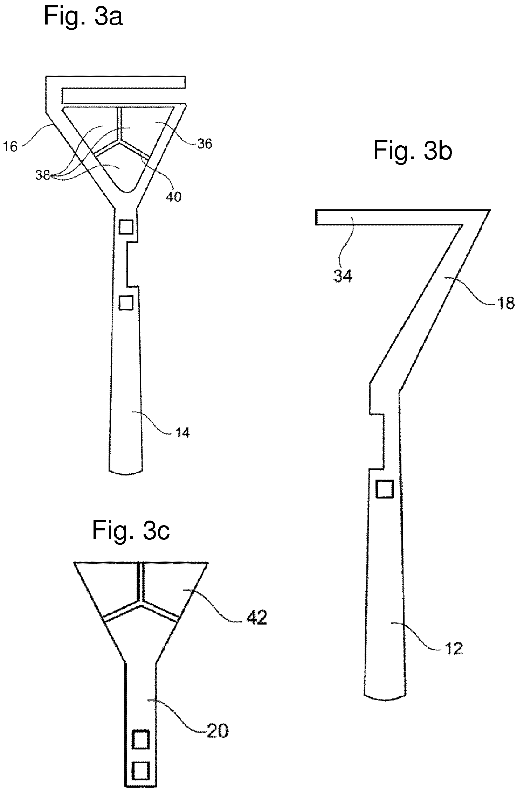

Die erfindungsgemäße Zange weist in ihrer Minimalkonfiguration zwei Zangenschenkel 12 und 14 auf, wobei die erste Zangenbacke 18 an ihrer der Griffseite abgewandten Seite eine spezielle Formgebung 34 aufweist. Diese Formgebung, beispielsweise in Form einer spitz zulaufenden Kante - siehe Figur 2a und 2b -, greift in den Zwischenraum ein, der durch zwei benachbarte prismenförmige Schokoladenstücke 11 gebildet wird und erzeugt eine Sollbruchstelle im Schokoladenverbund. Im Moment des Zusammenwirkens der Zangenschenkel wird der äußerste Block des Schokoladenverbundes durch die spezielle Kante der Formgebung 34 dann abgehebelt und dieselbe wird in eine korrespondierende Ausnehmung 35 auf der gegenüberliegenden Zangenbacke 16 geführt (vgl. auch Figur 3b).

Die zweite Zangenbacke 16 des Zangenschenkels 14 umfasst eine Aufnahmeeinheit 36 zur Aufnahme des abgetrennten Schokoladenstücks. Dies ist in Draufsicht auch aus Figur 3a ersichtlich. In der Aufnahmeeinheit 36 der zweiten Zangenbacke 16 wiederum ist eine Schneideeinheit 40 angeordnet, die Öffnungen 38 umfasst.

In einer besonderen Ausführungsform weist die Zangenkopf 22 der Zange 10 drei Zangenbacken 16, 18 und 20 auf, welche gelenkig mit den Zangenschenkeln 12 und 14 verbunden sind. Der die drei Zangenbacken 16, 18 und 20 umfassende Zangenkopf 22 der Zange 10 ist über eine Verbindungsstange 24 und vier Verbindungsgelenke 26, 28, 30 und 32 mit den Zangenschenkeln 12 und 14 gelenkig verbunden.

Die dritte Zangenbacke 20 mit Pressstempel 42, wirft das abgetrennte Schokoladenstück aus der Zange 10 aus (vgl. hierzu auch Figur 3c).

Die zweite und dritte Zangenbacke 16 und 20 wirken also über eine Hebelbewegung in der Art zusammen, dass das in der Aufnahmeeinheit 36 befindlichen Schokoladenstück beim Zusammendrücken der Zangenschenkel 12 und 14 zerteilt wird. Von Vorteil erweist es sich, wenn hierzu noch ein Schneideeinheit 40 in die Aufnahmeeinheit 36 eingebracht ist, denn dann wird das abgetrennte Schokoladenstück gleichzeitig in kleinere Stücke zerteilt, nämlich indem der Presstempel 42 das Schokoladenstück gegen und durch die Schneideeinheit drückt.

Zu diesem Zweck ist es natürlich vorteilhaft, wenn die Aufnahmeeinheit 36 eine korrespondierende Form zu dem abgetrennten Schokoladenstück aufweist, denn ansonsten würde das Schokoladenstück nicht in die Form passen. Genauso ist es sinnvoll, wenn der Pressstempel 42 eine korrespondierende Form zu der Aufnahmeeinheit 36 aufweist.

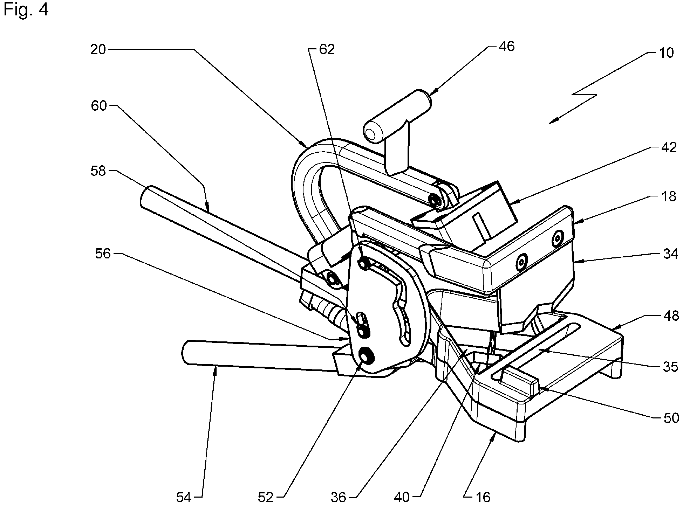

Die Figuren 4 bis 14 zeigen weitere bevorzugte Ausführungsformen der Zange.

Figur 4 zeigt die perspektivische Gesamtdarstellung einer erfindungsgemäßen Zange 10 zum Abtrennen von Schokoladenstücken, insbesondere von quasi prismenförmigen Schokoladenstücken einer Toblerone in geöffnetem Zustand, schräg von vorne.

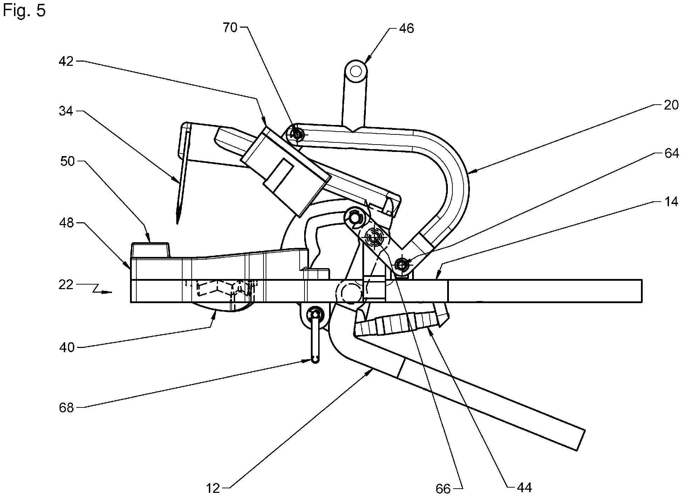

Die Zange 10 umfasst zwei manuell betätigbare Zangenschenkel 12 und 14 (vgl. Figur 5), die insbesondere jeweils einen Griff 54, 60 aufweisen (siehe Figur 4). Die Zange 10 umfasst wenigstens ein Verbindungsgelenk sowie einen Zangenkopf mit wenigstens zwei Zangenbacken 16 und 18. Die erste Zangenbacke 18 ist aktiv ausgestaltet, insbesondere beweglich und weißt eine Formgebung 34 beispielsweise in Form eines Quermessers auf. Diese Formgebung 34 dient zur Erzeugung einer Sollbruchstelle zwischen hintereinander zu einem Schokoladenverbund angeordneten quasi prismenförmigen Schokoladenstücken. Die zweite Zangenbacke 16 ist passiv ausgestaltet, als Gegenstück zur ersten, aktiv ausgestalteten Zangenbacke 18. Durch Zusammenwirken der Zangenbacken 16 und 18 wird ein Schokoladenstück vom Schokoladenverbund abgehebelt. Zu diesem Zweck sind die Zangenschenkel über wenigstens ein Verbindungsgelenk gelenkig miteinander verbunden.

Die erste Zangenbacke 18 ist insbesondere aktiv ausgestaltet und beweglich und stellt das Kopfende des aktiv ausgestalteten, beweglichen Zangenschenkels 12 (vgl. Figur 5) dar. Die zweite Zangenbacke 16 ist insbesondere passiv ausgestaltet und feststehend und stellt das Kopfende des passiv ausgestalteten, feststehenden Zangenschenkels 14 (vgl. Figur 5) dar.

Die Zange umfasst vorzugsweise eine Ausnehmung 35, die insbesondere die Formgebung 34, beispielsweise ein Quermesser aufnimmt, nachdem ein Schokoladenstück, insbesondere in Form einer dreieckigen Schokoladenrippe, vom Schokoladenverbund bzw. Schokoladenriegel abgetrennt wurde. Die Zangenbacke 16 umfasst vorzugsweise eine Auflage 48 für den Schokoladenverbund und einen Anschlag 50 zum Ausrichten des Schokoladenverbundes.

Insbesondere umfasst die Zange 10 neben den beiden Zangenbacken 16, 18 auch eine dritte Zangenbacke 20, die die Funktion eines Ausdrückers erfüllt. Die dritte Zangenbacke 20 weist beispielsweise einen Griff 46 auf, und am Kopfende ist insbesondere ein Pressstempel 42 mit der Funktion eines Ausdrückkopfes angebracht. Der Pressstempel 42 ist über ein Gelenk mit der dritten Zangenbacke 20 verbunden. Der Pressstempel 42 ist vorzugsweise dreieckig geformt und weist damit insbesondere die Form des abzutrennenden Schokoladenstückes auf. Darüber hinaus ist die Form des Pressstempels 42 so ausgestaltet, dass dieser passgenau in die Aufnahmeeinheit 36 für das abgetrennte Schokoladenstück passt. Die Aufnahmeeinheit 36 wiederum ist so ausgestaltet, dass das abgetrennte Schokoladenstück passend von der Aufnahmeeinheit 36 aufgenommen werden kann.

In die Aufnahmeeinheit 36 kann beispielsweise eine Schneideeinheit 40 eingesetzt werden, welche insbesondere als Schneidstern sternförmig ausgestaltet ist. Nachdem ein Schokoladenstück durch Zusammenwirken der Zangenbacken 16, 18 und der Formgebung 34 vom Schokoladenverbund bzw. Schokoladenriegel abgetrennt worden ist, wird das abgetrennte Schokoladenstück von der Aufnahmeeinheit 36 aufgenommen. Durch weiteres Zusammendrücken der Griffe 54, 60 wird der an der dritten Zangenbacke 20 gelenkig angebrachte Pressstempel 42 auf ein in der Aufnahmeeinheit 36 befindliches abgetrenntes Schokoladenstück gedrückt. Bei weiterem Zusammendrücken der Griffe 54, 60 senkt sich die dritte Zangenbacke 20 mit dem Pressstempel 42 weiter ab und drückt das abgetrennte Schokoladenstück durch die Schneideeinheit 40, wodurch das abgetrennte Schokoladenstück in kleinere, mundgerechte Stücke zerteilt wird.

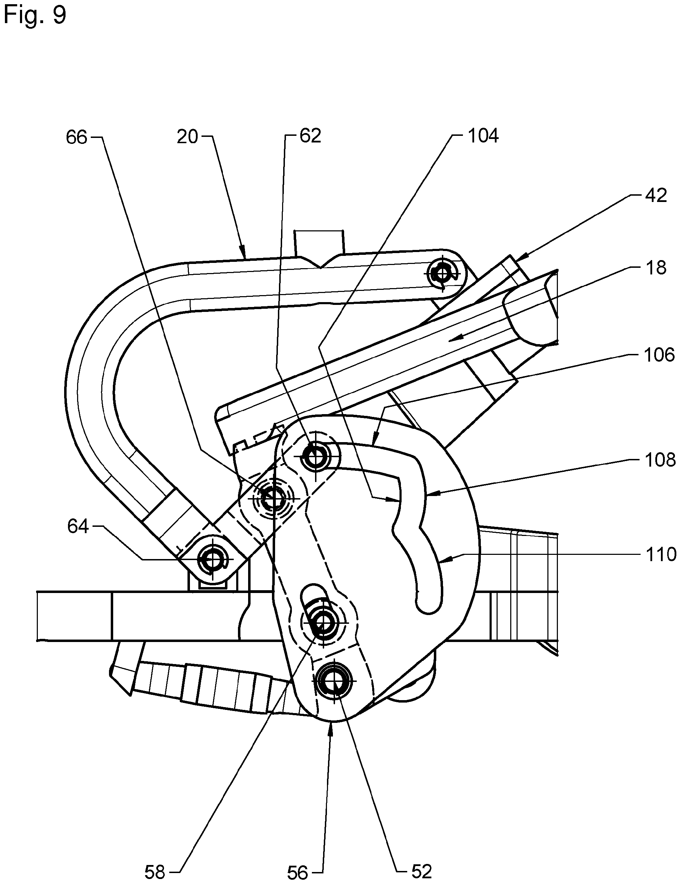

Die Zange 10 umfasst insbesondere eine Kulisse 56 mit einer Kulissenbahn 104 (dargestellt in Figur 9), welche die Bewegungsrichtung und den Bewegungsverlauf der dritten Zangenbacke 20 vorgibt. Dazu umfasst die Zange 10 insbesondere eine Rolle 62, welche am Schenkel an der dritten Zangenbacke 20, dem sogenannten Ausdrücker, gelagert ist und mit der Kulisse 56 und insbesondere der Kulissenbahn 104 (dargestellt in Figur 9) zusammenwirkt. Die Kulisse 56 weist insbesondere einen Drehpunkt 52 auf, an dem die Kulisse 56 vorzugsweise mit dem passiv ausgestalteten, insbesondere feststehenden Teil der Zange verbunden ist. Zudem ist in der Kulisse 56 ein Loch vorgesehen, in welches eine Rolle 58 eingreift, die am Zangenschenkel der insbesondere beweglichen, aktiv ausgestalteten Zangenbacke gelagert ist.

Vorzugsweise sind der Pressstempel 42 und die Zangenbacke 16, welche die Aufnahmeeinheit 36 umfasst, modular austauschbar, sodass unterschiedlich große Pressstempel 42 passend zu der jeweiligen Größe der Zangenbacke 16 mit der entsprechend großen Aufnahmeeinheiten 36 an der Zange 10 angebracht werden können. Auf diese Weise ist es möglich, die Zange 10 an unterschiedlich große Schokoladenstücke, insbesondere unterschiedlich große Tobleronestücke, anzupassen. Auch die Aufnahmeeinheit 36 kann modular austauschbar sein.

Figur 5 zeigt eine Seitenansicht von links der Zange in geöffnetem Zustand. Die Zange umfasst einen Zangenschenkel 14, welcher insbesondere passiv ausgestaltet und vorzugsweise feststehend ist. Mit dem Zangenschenkel 14 ist die dritte Zangenbacke 20 gelenkig verbunden. Die dritte Zangenbacke 20 mit der Funktion eines Ausdrückers kann am Drehpunkt 64 eine Drehbewegung ausführen, wenn die beiden Zangenschenkel 12, 14 zusammengedrückt werden. Die dritte Zangenbacke 20 umfasst einen Griff 46 und einen Pressstempel 42. Der Pressstempel 42, beispielsweise in Form eines Ausdrückkopfes, ist mit der dritten Zangenbacke 20 gelenkig verbunden und kann eine Drehbewegung am Drehpunkt 70 ausführen.

Mit dem Zangenschenkel 14 ist der Zangenschenkel 12 gelenkig verbunden. Der Zangenschenkel 12 ist insbesondere aktiv ausgestaltet und beweglich. Der Zangenschenkel 12 kann am Drehpunkt 66 eine Drehbewegung ausführen. Der Drehpunkt 66 stellt insbesondere das Verbindungsgelenk der Zangenschenkel 12, 14 dar. Dadurch kann sich die aktiv ausgestaltete Zangenbacke, welche eine Formgebung 34 umfasst, auf die passiv ausgestaltete Zangenbacke absenken. Die passiv ausgestaltete Zangenbacke umfasst insbesondere einen Anschlag 50, eine Auflage 48 und eine Schneideeinheit 40. Der Anschlag 50 sorgt für die richtige Positionierung des Schokoladenriegels auf der Zange. Die Auflage 48 dient als Auflage des Schokoladenriegels mit einem abzutrennenden Schokoladenstück, insbesondere eines Schokoladenverbunds eines Toblerone Schokoladenriegel. Die Schneideeinheit 40 dient zum Zerteilen eines abtrennten Schokoladenstücks.

Das Kopfende des aktiv ausgestalteten Zangenschenkels 12 (Zangenbacke 18) und das Kopfende des passiv ausgestalteten Zangenschenkels 14 (Zangenbacke 16) bilden zusammen den Zangenkopf 22. Der Zangenkopf 22 umfasst vorzugsweise auch die dritte Zangenbacke 20 mit dem Pressstempel 42.

Die beiden Zangenschenkel 12 und 14 sind ferner vorzugsweise mit einem Federelement 44 miteinander verbunden, gegen dessen Federkraft die Zange zu bewegen ist und welches die Zange nach Zusammendrücken wieder öffnet. Damit bei der Zange im Ruhezustand die Zangenschenkeln 12 und 14 nicht aufgrund der Federwirkung des Federelements 44 auseinandergedrückt werden, umfasst die Zange eine Zuhaltung, die in Figur 5 bei geöffneter Zange in Position "offen" 68 dargestellt ist.

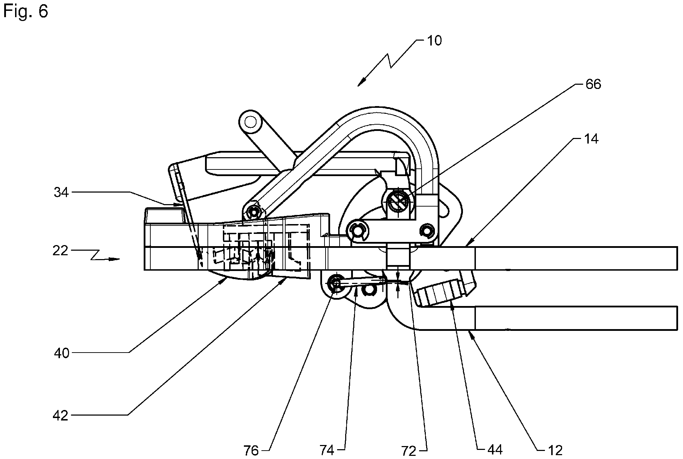

Figur 6 zeigt eine Zange 10, bei der die Zangenschenkel 12, 14 aneinandergedrückt sind und die Zangenbacken, welchen den Zangenkopf 22 bilden, dadurch ebenfalls zusammengedrückt sind. Auch das Federelement 44, welches beispielsweise eine Spiralfeder ist, ist zusammengedrückt. Die Zange 10 hat in Figur 6 den Totpunkt 72 erreicht, so dass die beiden Zangenschenkel 12, 14, welche über den Drehpunkt 66 gelenkig miteinander verbunden sind, nicht weiter zusammengedrückt werden können. Damit sich die Zange 10 bei zusammengedrückten Zangenschenkeln 12, 14 nicht aufgrund des Federelements 44 ungewollt öffnet, umfasst die Zange 10 eine Zuhaltung 74, die in Figur 6 in Position "zu" gezeigt ist. Die Zuhaltung weist einen Drehpunkt 76 auf, über den die Zuhaltung manuell geschlossen und geöffnet werden kann. Bei zusammengedrückten Zangenbacken ist der Pressstempel 42 in der Ausnehmung der passiv ausgestalteten Zangenbacke als Teil des Zangenkopfes 22 versenkt und deckt die Scheideeinheit 40 ab, was einen Schutz vor unbeabsichtigten Eingreifen in die Schneideeinheit 40 darstellt. Bei geschlossener Zange in Figur 6 ist auch die Formgebung 34, beispielsweise ein Quermesser, in einer Ausnehmung des Zangenkopfes 22 versenkt, wodurch ein ungewolltes Eingreifen in das Quermesser verhindert wird.

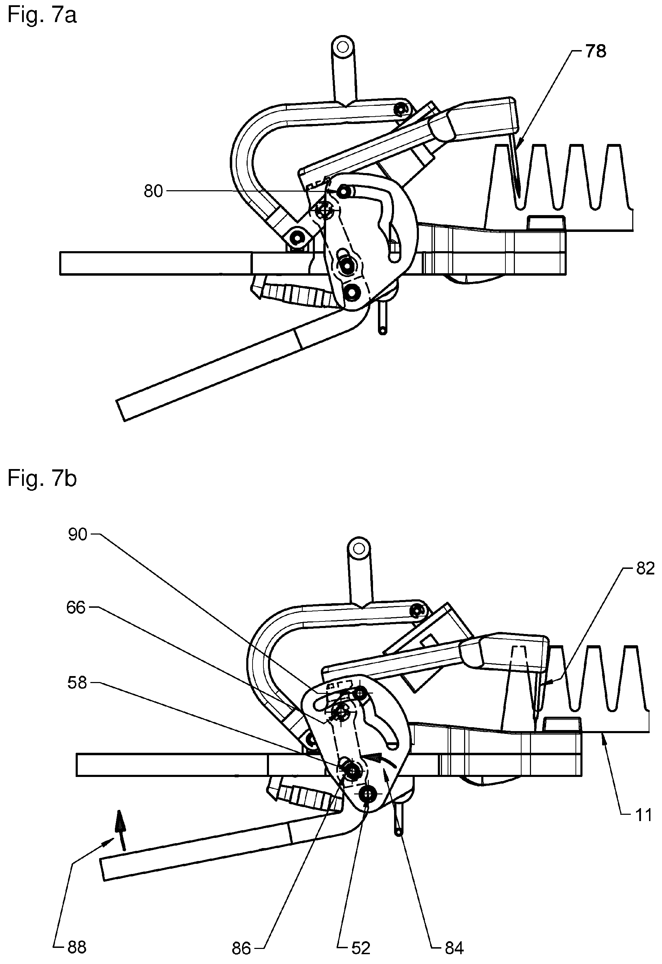

Figuren 7a und 7b zeigen die Seitenansicht der Zange von rechts. In den Figuren 7a und 7b sind die unterschiedlichen Positionen der Zangenschenkel und Zangenbacken "vor" (Figur 7a) und "nach" (Figur 7b) dem Abtrennen eines Schokoladenstückes vom Schokoladenriegel 11 dargestellt. In Figur 7a ist die Zange komplett geöffnet und die Zangenschenkel sind nicht zusammengedrückt. Die erste, aktiv ausgestaltete und insbesondere bewegliche Zangenbacke mit der Formgebung befindet sich in der obersten Position 78 und damit in der Ausgangsstellung, um ein Schokoladenstück vom Schokoladenverbund 11 abzutrennen. In Figur 7b befindet sich die erste Zangenbacke in der Position 82, in der durch die Formgebung ein Schokoladenstück bzw. Schokoladenrippe vom Schokoladenriegel 11 abgetrennt ist.

Anhand des Vergleichs der Figuren 7a und 7b ist das Zusammenspiel von Kulisse 56 und der Rolle 62 am Schenkel der dritten Zangenbacke bis zum Abtrennen eines Schokoladenstückes vom Schokoladenriegel 11 zu erkennen (dargestellt in Figur 9). In Figur 7a befindet sich die Rolle 62 der dritten Zangenbacke in der Ausgangs- bzw. Grundstellung 80. Die Kulisse hat die Aufgabe, die Bewegungen der dritten Zangenbacke gezielt zu steuern. Dies geschieht über die Form der Kulissenbahn 104 (dargestellt in Figur 9). Durch Bewegen des aktiv ausgestalteten, beweglichen Zangenschenkels um Drehpunkt 66 in der Bewegungsrichtung 88 in Figur 7b dreht sich die Kulisse um den Drehpunkt 52 in der Bewegungsrichtung 84 im Gegenuhrzeigersinn. Die Drehbewegung der Kulisse erfolgt mittels der am aktiv ausgestalteten, beweglichen Zangenschenkel gelagerten Rolle 58, die tangential am Langloch in der Kulisse 86 angreift. Während des Zusammendrückens der Zangenschenkel 88 bewegt sich die aktiv ausgestaltete Zangenbacke bis die Position 82 erreicht ist. Die aktiv ausgestaltete Zangenbacke stoppt beim Zusammendrücken der Zangenschenkel "automatisch" in Position 82, wenn sich die Rolle der dritten Zangenbacke in Position 90 am Ende des ersten Teilbereiches der Kulissenbahn (dargestellt in Figur 9) befindet. Diese Position 90 stellt das Ende des Arbeitsschrittes dar, in dem ein Schokoladenstück vom Schokoladenriegel 11 durch die an der aktiv ausgestalteten Zangenbacke befestigte Formgebung in Position 82 abtrennt wurde. Bedingt ist das Ende dieses Arbeitsschrittes durch die Form der Kulissenbahn. Die dritte Zangenbacke verändert in diesem Arbeitsschritt ihre Position nicht und wird vom ersten Teilbereich der Kulissenbahn "oben" gehalten. Somit bleibt Zeit, dass das abgetrennte Schokoladenstück umkippen kann und sich anschließend mit der Seite auf die Schneideeinheit der passiv ausgestalteten Zangenbacke legt.

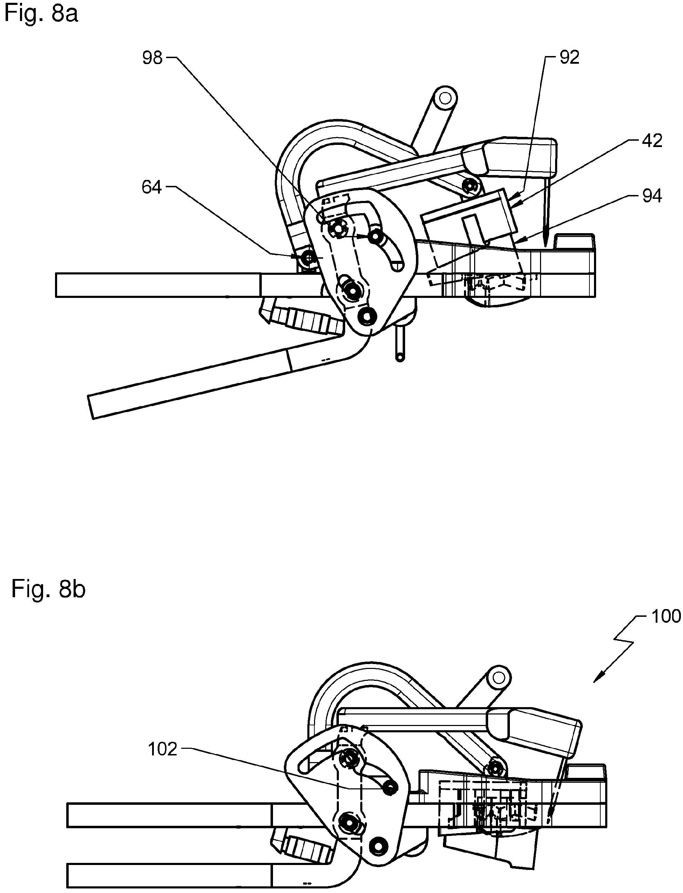

Die Figuren 8a und 8b zeigen die Seitenansicht der Zange 10 von rechts. Dargestellt ist das Zusammenspiel von Kulisse und Rolle der dritten Zangenbacke nachdem ein Schokoladenstück 94 von einem Schokoladenverbund abgetrennt wurde, umgekippt ist und sich in der Ausnehmung der passiv ausgestalteten Zangenbacke befindet. Durch eine Druckverringerung (vermindertes Zusammendrücken der Zangenschenkel) wird die Rolle der dritten Zangenbacke nicht mehr an die Kulissenbahn 104 (dargestellt in Figur 9) gedrückt. Dadurch fällt die drehpunktgelagerte 64 dritte Zangenbacke 20 (siehe auch Figur 9) durch das Eigengewicht und aufgrund der senkrecht nach unten zeigenden Form der Kulissenbahn 104 auf das abgetrennte Schokoladenstück (zweiter Teilbereich der Kulissenbahn 104 dargestellt in Figur 9). Die Rolle der dritten Zangenbacke steht in Figur 8a in Position 98. Der Pressstempel 42 liegt an gekippter Schokorippe an 92 und ist bereit zum Ausdrücken bzw. Durchdrücken des Schokoladenstückes 94 durch die Schneideeinheit.

Durch weiteres Zusammendrücken der Zangenschenkel wird der dritte Teilbereich der Kulissenbahn 104 (dargestellt in Figur 9) genutzt. Dieser bewirkt, dass sich die in der Kulissenbahn 104 zwangsgeführte Rolle des dritten Zangenbackens immer weiter in Richtung Position 102 in Figur 8b bewegt (Übergang von Figur 8a zu 8b). Bei diesem Arbeitsschritt drückt der Pressstempel 42 das abgetrennte Schokoladenstück 94 gegen die Schneideeinheit der ersten, passiv ausgestalteten Zangenbacke. Die Schneideeinheit teilt hierbei das Schokoladenstück beispielsweise in drei rautenförmige Stücke. Der Pressstempel 42, insbesondere ein Ausdrückkopf, drückt nach dem Teilungsvorgang die rautenförmigen Stücke aus der Zange. Figur 8b zeigt somit den Zustand, in dem der Pressstempel ein Schokoladenstück geteilt und ausgedrückt hat 100.

Wenn die Zangenschenkel nicht mehr zusammengedrückt werden, geht die Zange mittels des Federelementes wieder in ihre geöffnete Grundstellung. Da das Federelement im zweiten Teilbereich der Kulissenbahn aufgrund der Form der Kulissenbahn nicht auf die Rolle des dritten Zangenschenkels wirken kann, wird durch ein "Nach-oben-Ziehen" des Griffes an der dritten Zangenbacke die Rolle der dritten Zangenbacke zum ersten Teilbereich der Kulissenbahn geführt. Im Teilbereich 1 der Kulissenbahn kann das Federelement wieder seine Wirkung entfalten.

Figur 9 zeigt die Seitenansicht auf einen Teilbereich der Zange von rechts. Dargestellt ist das Zusammenspiel von Kulisse 56 und Rolle 62 der dritten Zangenbacke, welche in der Kulissenbahn 104 positioniert ist. Beim Zusammendrücken der Zangenschenkel werden die erste, aktiv ausgestaltete Zangenbacke 18 und die zweite, passiv ausgestaltete Zangenbacke zusammengedrückt. Die erste und zweite Zangenbacke führen eine Drehbewegung vermittelt über die gelenkige Verbindung im Drehpunkt 66 aus. Durch die Rolle 58 am ersten, aktiv ausgestalteten Zangenschenkel, welche in ein Langloch in der Kulisse eingreift, bewegt sich die Kulisse 56 im Gegenuhrzeigersinn um den Drehpunkt 52. Am Drehpunkt 52 ist die Kulisse an der zweiten, passiv ausgestalteten Zangenbacke gelenkig befestigt. Durch die Drehbewegung der Kulisse 56 um den Drehpunkt 52 wird die Rolle 62 der dritten Zangenbacke 20 in der Kulissenbahn 104 entlanggeführt. Die Geometrie der Kulissenbahn 104 gibt die Bewegung der dritten Zangenbacke 20 vor. Die dritte Zangenbacke 20 ist gelenkig mit dem zweiten, passiv ausgestalteten Zangenschenkel verbunden 64. Dadurch kann die dritte Zangenbacke 20 mit dem Pressstempel 42 die von der Kulissenbahn 104 vorgegebene und durch die Rolle 62 vermittelte Bewegung ausführen.

Die Kulissenbahn 104 umfasst drei Teilbereiche. Solange sich die Rolle 62 im Teilbereich 1 der Kulissenbahn 106 befindet, verbleibt die dritte Zangenbacke in der Ausgangsposition. Werden die Zangenschenkel weiter zusammengedrückt, dann dreht sich die Kulisse weiter um den Drehpunkt 52, sodass sich die Rolle 62 der dritten Zangenbacke dann im Teilbereich 2 der Kulissenbahn 108 befindet. Im Teilbereich 2 bewegt sich die dritte Zangenbacke dann in Richtung der passiv ausgestalteten Zangenbacke, welche das abgetrennte Schokoladenstück aufgenommen hat. Bei weiterem Zusammendrücken der Zangenschenkel erreicht die Rolle 62 der dritten Zangenbacke den Teilbereich 3 der Kulissenbahn 110. Im Teilbereich 3 hat sich die dritte Zangenbacke vermittelt durch die Geometrie der Kulissenbahn in Teilbereich 3 weiter in Richtung zweite, passiv ausgestaltete Zangenbacke bewegt, wodurch der Pressstempel 42 das Schokoladenstück vollständig durch die Schneideeinheit in der zweiten, passiv ausgestalteten Zangenbacke gedrückt hat. Dadurch wird das abgetrennte Schokoladenstück zerteilt und vom Pressstempel 42 vollständig durch die Ausnehmung der zweiten, passiv ausgestalteten Zangenbacke gedrückt.

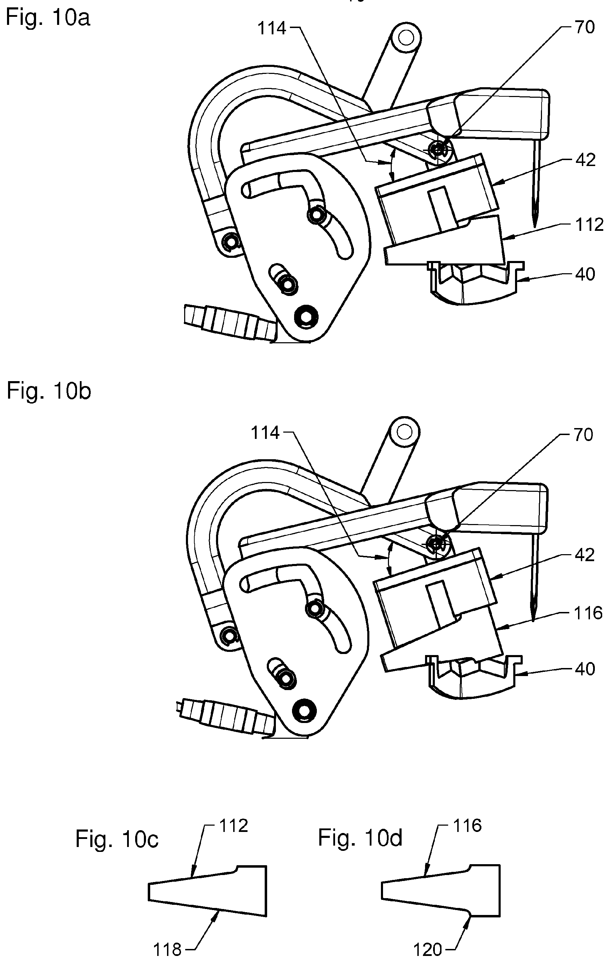

Figuren 10a bis 10d zeigen die Seitenansicht von rechts auf einen Teilbereich der Zange. Es wird die Funktion des Pressstempels 42 gezeigt. Der Pressstempel 42 ist über einen Drehpunkt 70 pendelnd gelagert. Dies ist erforderlich, weil sich die Schokoladenstücke, beispielsweise Schokoladenrippen, des Schokoladenriegels voneinander unterscheiden. Die mittleren (oder inneren) Schokoladenrippen 116 weisen im Vergleich zur Anfangsrippe 112 eine zusätzliche Ecke 120 auf. Dort wo bei den mittleren Schokoladenrippen 116 eine zusätzliche Ecke 120 vorhanden ist, ist bei der Anfangsrippe eine glatte Fläche 118. Durch diese unterschiedliche Geometrie liegen diese Schokoladenstücke (Schokoladenrippen) nicht in der gleichen Lage auf der Schneideeinheit 40 auf. Um einen gleichmäßigen Flächendruck zu erzielen, schwenkt der Pressstempel 42 gemäß der jeweiligen Geometrie und legt sich auf die Rippe. Somit wird vermieden, dass eine der drei Schneiden der Schneideeinheit 40 zuerst wirkt und die Schokoladenrippe ungewollt "platzen" würde. Der Schwenkbereich 114 des Pressstempels 42 ist begrenzt, um eine Kollision mit anderen Teilen der Zange zu vermeiden.

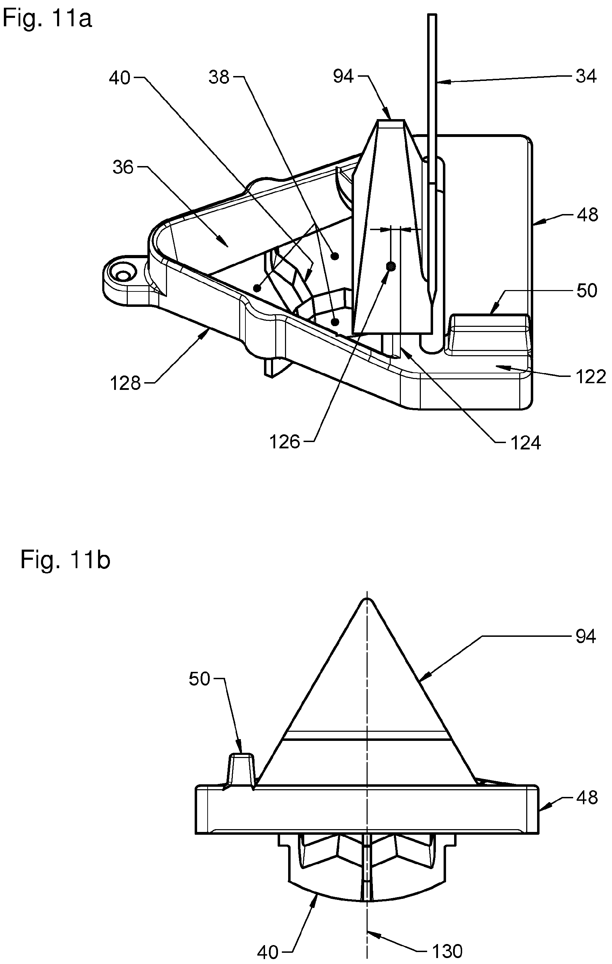

Figur 11 a und 11 b zeigen die Auflage 48 und den Anschlag 50 der Zange. Die Auflage 48 ist so gestaltet, dass ein abgetrenntes Schokoladenstück mit weniger als der Hälfte der Grundfläche auf der Auflagefläche 122 aufliegt. Dadurch befindet sich der Schwerpunkt 126 des abgetrennten Schokoladenstückes 94 außerhalb des Endes der Auflagefläche 124. Dies bewirkt ein Kippen des Schokoladenstückes 94 auf die Schneideeinheit 40 nachdem es vom Schokoladenriegel mit der Formgebung 34 abgetrennt wurde. Ein trichterförmiger Auffangrahmen 128, welcher Teil der Aufnahmeeinheit 36 der passiv ausgestalteten Zangenbacke ist, leitet das Schokoladenstück 94 mittig zur Schneideeinheit 40. Der Anschlag 50 sichert ein mittiges Positionieren des Schokoladenriegels zur Mitte der Zange 130. Zudem sind in Figur 11 die Öffnungen 38 zu erkennen, durch die die zerkleinerten Schokoladenteilstücke mittels des Presstempels aus der Zange gedrückt werden.

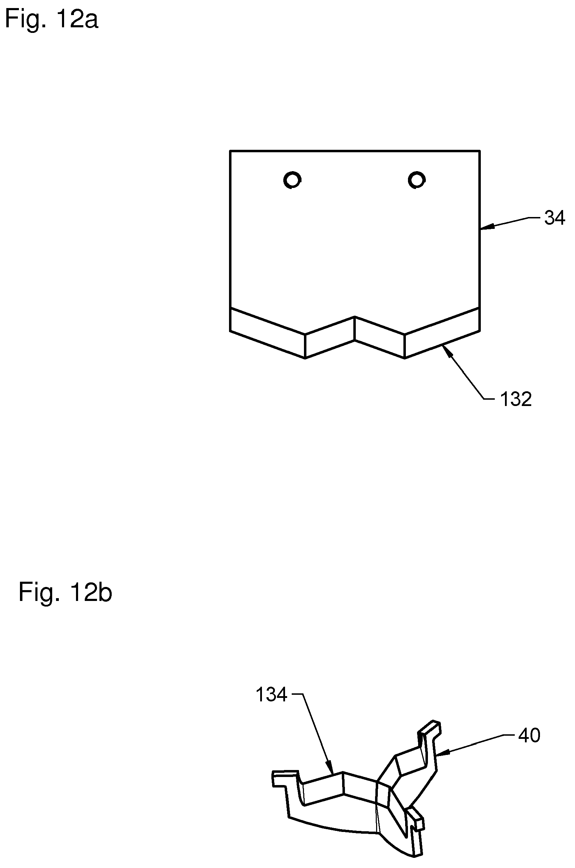

Figur 12a stellt die Formgebung 34, beispielsweise in Form eines Quermessers dar. Figur 12b stellt die Schneideeinheit 40, beispielsweise in Form eines Schneidsterns dar. Formgebung 34 und Schneideeinheit 40 weisen eine Schneide 132, 134 auf. Die Schneide kann beispielsweise jeweils linear, zackig oder wellenförmig sein. Durch eine nichtlineare Schneide ist insbesondere kein hoher Kraftaufwand erforderlich, weil zuerst die Spitzen bzw. Radien in Schokoladenstücke, insbesondere Schokoladenrippen, eindringen und somit der Effekt des Vorschneidens stattfinden kann.

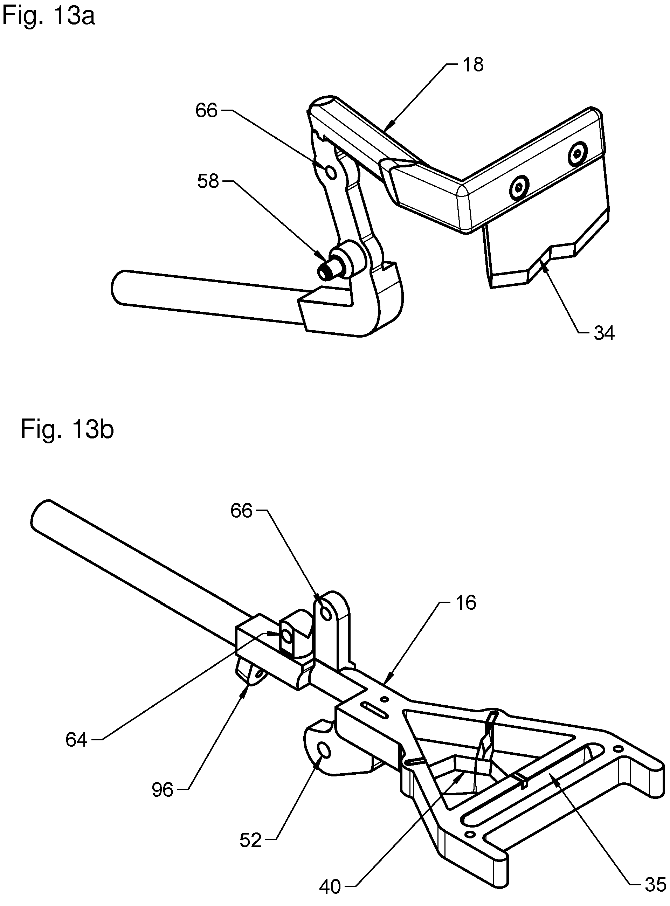

Figur 13a zeigt die Darstellung der aktiv ausgestalteten, beweglichen Zangenbacke 18 mit der Befestigung der Formgebung 34, beispielsweise eines Quermessers. Das Quermesser ist an der beweglichen Zangenbacke angeschraubt. Zudem ist in Figur 13a der Drehpunkt für die erste, aktiv ausgestaltete, insbesondere bewegliche Zangenbacke 66 sowie die Rolle 58, gelagert am beweglichen bzw. aktiv ausgestalteten Zangenschenkel zum Eingreifen in die Kulisse gezeigt.

Figur 13b zeigt die Darstellung der zweiten, insbesondere passiv ausgestalteten, feststehenden Zangenbacke 16 mit der Aufnahmeeinheit für das abgetrennte Schokoladenstück und die Schneideeinheit 40 in Form eines Schneidesterns. Der Schneidestern ist in die Aufnahmeeinheit der feststehenden Zangenbacke eingebettet. Zudem ist in Figur 13b der Drehpunkt für den ersten, aktiv ausgestalteten Zangenschenkel 66, der Drehpunkt für die dritte Zangenbacke 64, der Drehpunkt für die Kulisse 52 und die Halterung für das Federelement 96 gezeigt. Die passiv ausgestaltete Zangenbacke umfasst außerdem eine Ausnehmung 35, in der die Formgebung beispielsweise ein Quermesser bei geschlossener Zange aufgenommen werden kann.

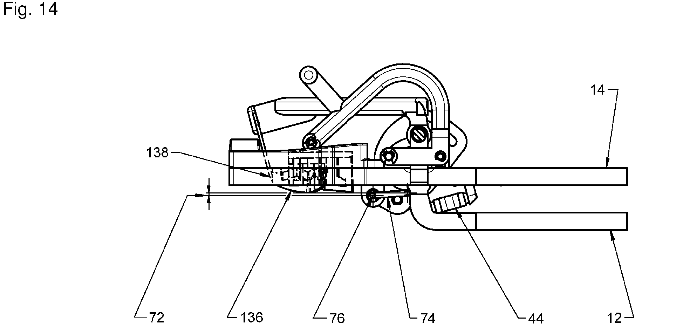

Figur 14 zeigt die Seitenansicht der Zange von links in geschlossenem Zustand, bei dem die Zangenschenkel 12, 14 zusammengedrückt sind. Der Figur 14 ist die Funktion der Zuhaltung zu entnehmen. Um Schnittverletzungen nach dem Gebrauch der Zange zu vermeiden, ist die Zange mit einer Zuhaltung ausgestattet. Diese ist über einen Drehpunkt 76 gelagert. Dreht man die Zuhaltung 74 zum beweglichen, aktiv ausgestalteten Zangenschenkel 12 bis zum Anschlag, befindet sich der Schenkel der Zuhaltung 74 oberhalb des Drehpunktes 76, also oberhalb des Totpunktes 72. Dadurch kann sich die Zuhaltung 74 nicht mehr öffnen, weil das Federelement 44 den beweglichen, aktiv ausgestalteten Zangenschenkel gegen den Schenkel der Zuhaltung 74 drückt. In diesem verriegelten Zustand befindet sich die Schneide der Formgebung innerhalb der passiv ausgestalteten Zangenbacke in Position 138 und ist "versenkt". Die Schneide des Schneideelements ist durch den Presstempel abgedeckt 136.

### Bezugszeichen

- 10: Zange
- 11: Schokoladenriegel
- 12: Zangenschenkel
- 14: Zangenschenkel
- 16: zweite Zangenbacke
- 18: erste Zangenbacke
- 20: dritte Zangenbacke
- 22: Zangenkopf
- 24: Verbindungsstange
- 26, 28, 30, 32: Verbindungsgelenk
- 34: Formgebung der ersten Zangenbacke 18 zur Erzeugung einer Sollbruchstelle
- 35: korrespondierende Ausnehmung zu 34
- 36: Aufnahmeeinheit der zweiten Zangenbacke 16 für abgetrennte Schokoladenstücke
- 38: Öffnungen
- 40: Schneideeinheit
- 42: Presstempel zu 20
- 44: Federelement
- 46: Griff an der dritten Zangenbacke
- 48: Auflage
- 50: Anschlag
- 52: Drehpunkt Kulisse
- 54: Griff des beweglichen Zangenschenkels
- 56: Kulisse
- 58: Rolle, gelagert am beweglichen Zangenschenkel
- 60: Griff des feststehenden Zangenschenkels
- 62: Rolle, gelagert am Ausdrücker bzw. am Schenkel der dritten Zangenbacke
- 64: Drehpunkt der dritten Zangenbacke
- 66: Drehpunkt des beweglichen Zangenschenkels / Verbindungsgelenk der Zangenschenkel 12, 14
- 68: Zuhaltung "offen"
- 70: Drehpunkt des Ausdrückkopfes
- 72: Totpunkt
- 74: Zuhaltung "zu"
- 76: Drehpunkt Zuhaltung
- 78: erste Zangenbacke mit Formgebung 34 in oberster Position
- 80: Rolle der dritten Zangenbacke in Position "Grundstellung"
- 82: Formgebung hat Schokoladenstück abgetrennt
- 84: Bewegungsrichtung der Kulisse
- 86: Langloch in der Kulisse
- 88: Bewegungsrichtung des beweglichen Zangenschenkels
- 90: Rolle der dritten Zangenbacke in Position "Schokoladenstück abgetrennt"
- 92: Pressstempel liegt an gekippter Schokoladenrippe an
- 94: Schokoladenstück
- 96: Halterung für Federelement
- 98: Rolle der dritten Zangenbacke in Position "bereit zum Ausdrücken"
- 100: Pressstempel hat Schokoladenstück geteilt und ausgedrückt
- 102: Rolle der dritten Zangenbacke in Position "Schokoladenstück ausgedrückt"
- 104: Kulissenbahn in 3 Bereiche unterteilt
- 106: Teilbereich 1 der Kulissenbahn - dritte Zangenbacke mit Pressstempel oben
- 108: Teilbereich 2 der Kulissenbahn - dritte Zangenbacke mit Pressstempel senkt sich auf Schokoladenstück ab
- 110: Teilbereich 3 der Kulissenbahn - dritte Zangenbacke mit Pressstempel drückt das Schokoladenstück vollständig durch die Schneideeinheit. Somit wird dieses in 3 rautenförmige Stücke geteilt.
- 112: Anfangsrippe (Schokoladenrippe)
- 114: begrenzter Schwenkbereich des Pressstempels 42
- 116: mittlere Rippe (Schokoladenrippe)
- 118: glatte Fläche
- 120: zusätzliche Ecke
- 122: Auflagefläche der Auflage 48
- 124: Ende der Auflagefläche
- 126: Schwerpunkt des Schokoladenstücks
- 128: Auffangrahmen
- 130: Mitte der Zange
- 132: Schneide von Formgebung 34
- 134: Schneide von Schneideeinheit 40
- 136: Schneide 134 von Schneideeinheit durch Pressstempel 42 abgedeckt
- 138: Formgebung 34 "versenkt"

## Patentansprüche

1. Zange zum Abtrennen von Schokoladenstücken, insbesondere von quasi prismenförmigen Schokoladenstücken einer Toblerone, umfassend zwei manuell betätigbare Zangenschenkel (12, 14) und wenigstens ein Verbindungsgelenk (26, 66) **dadurch gekennzeichnet, dass** die Zange (10) einen Zangenkopf (22) mit wenigstens drei Zangenbacken (16, 18, 20) umfasst, wobei die erste Zangenbacke (18) aktiv ausgestaltet ist und eine Formgebung (34) zur Erzeugung einer Sollbruchstelle zwischen hintereinander zu einem Schokoladenverbund angeordneten quasi prismenförmigen Schokoladenstücken aufweist und die zweite Zangenbacke (16) passiv ausgestaltet ist, als Gegenstück zur ersten Zangenbacke (18), und das abzutrennende Schokoladenstück durch das Zusammenwirken der Zangenbacken (16, 18) vom verbleibenden Schokoladenverbund abgehebelt wird und die zweite Zangenbacke (16) eine Aufnahmeeinheit (36) zur Aufnahme des abgetrennten Schokoladenstücks umfasst.

2. Zange nach Anspruch 1, **dadurch gekennzeichnet, dass** bei der Zange (10) zum Abtrennen eines Schokoladenstückes die Zangenschenkel (12, 14) in dem Verbindungsgelenk (26, 66) gelenkig miteinander verbunden sind.

3. Zange nach Anspruch 1 oder2, **dadurch gekennzeichnet, dass** die beiden Zangenschenkel (12, 14) mit wenigstens einem Federelement (44) miteinander verbunden, gegen dessen Federkraft die Zange zu bewegen ist und welches die Zange nach Zusammendrücken wieder öffnet.

4. Zange nach Anspruch 1 oder 3, **dadurch gekennzeichnet, dass** die dritte Zangenbacke (20) als Pressstempel (42) ausgebildet ist, die das abgetrennte Schokoladenstück aus der Zange (10) auswirft.

5. Zange nach Anspruch 1 oder 4, **dadurch gekennzeichnet, dass** der Zangenkopf (22) der Zange (10) drei Zangenbacken (16, 18, 20) umfasst, welche gelenkig mit den Zangenschenkeln (12, 14) verbunden sind.

6. Zange nach Anspruch 1 oder 5, **dadurch gekennzeichnet, dass** der drei Zangenbacken (16, 18, 20) umfassende Zangenkopf (22) der Zange (10) über eine Verbindungsstange (24), Verbindungsgelenke (26, 28, 30, 32), Kulisse (56), Drehpunkte (52, 64, 66) und/oder Rollen (58, 62) mit den Zangenschenkeln (12, 14) gelenkig verbunden ist.

7. Zange nach einem oder mehreren der vorhergehenden Ansprüche, **dadurch gekennzeichnet, dass** in der Aufnahmeeinheit (36) der zweiten Zangenbacke (16) eine Schneideeinheit (40) angeordnet ist.

8. Zange nach Anspruch 7, **dadurch gekennzeichnet, dass** die zweite Zangenbacke (16), in welcher die Schneideeinheit (40) angeordnet ist, Öffnungen (38) umfasst.

9. Zange nach Anspruch 7, **dadurch gekennzeichnet, dass** die zweite und dritte Zangenbacke (16, 20) über eine Hebelbewegung zum Zerteilen des in der Aufnahmeeinheit (36) befindlichen Schokoladenstückes beim Zusammendrücken der Zangenschenkel (12, 14) zusammenwirken.

10. Zange nach Anspruch 6 oder 9, **dadurch gekennzeichnet, dass** der Pressstempel (42) und die Schneideeinheit (40) zum Zerteilen des in der Aufnahmeeinheit (36) befindlichen Schokoladenstückes zusammenwirken.

11. Zange nach einem oder mehreren der vorhergehenden Ansprüche, **dadurch gekennzeichnet, dass** die Aufnahmeeinheit (36) eine korrespondierende Form zum abgetrennten Schokoladenstück sowie der Pressstempel (42) eine korrespondierende Form zur Aufnahmeeinheit (36) aufweist.

12. Zange nach einem oder mehreren der vorhergehenden Ansprüche zum Abtrennen und/oder Zerteilen von Schokoladenstücken, insbesondere von quasi prismenförmigen Schokoladenstücken einer Toblerone, **dadurch gekennzeichnet, dass** der Zangenkopf (22) modular aufgebaut ist, eine passiv ausgestaltete Zangenbacke (16) und eine oder zwei aktiv ausgestaltete Zangenbacken (18, 20) umfasst, wobei die Zangenbacken (18, 20) auswechselbar sind.

13. Kit für eine Zange nach einem oder mehreren der vorhergehenden Ansprüche zum Abtrennen und/oder Zerteilen von Schokoladenstücken, insbesondere von quasi prismenförmigen Schokoladenstücken einer Toblerone, umfassend eine passiv ausgestaltete Zangenbacke (16) und zwei aktiv ausgestaltete Zangenbacken (18, 20), wobei die Zangenbacken (18, 20) auswechselbar ausgestaltet sind.

## Claims

1. Pliers for severing pieces of chocolate, in particular quasi prism-shaped pieces of chocolate of Toblerone, comprising two manually operable plier limbs (12, 14) and at least one connecting joint (26, 66), **characterized in that** the pliers (10) comprise a plier head (22) with at least three plier jaws (16, 18, 20), wherein the first plier jaw (18) is actively configured and exhibits a shape (34) for producing a predetermined breaking point between quasi prism-shaped pieces of chocolate that are successively arranged on a chocolate base and the second plier jaw (16) is passively configured as a counterpart to the first plier jaw (18), and the piece of chocolate to be severed is pried from the remaining chocolate base through interaction of the plier jaws (16, 18), and the second plier jaw (16) comprises a capturing unit (36) for receiving the severed piece of chocolate.

2. Plier according to claim 1, **characterized in that** in the pliers (10) used to sever a piece of chocolate the plier limbs (12, 14) and the connecting joint (26, 66) are flexibly connected to one another.

3. Pliers according to claim 1 or 2, **characterized in that** both of the plier limbs (12, 14) are connected to each other with at least one spring element (44), against the force of which the pliers are to be moved and which allows the pliers to open after being closed together.

4. Pliers according to claim 1 or 3, **characterized in that** the third plier jaw (20) is configured as an extrusion punch (42) that discharges the severed piece of chocolate from the pliers (10).

5. Pliers according to claim 1 or 4, **characterized in that** the plier head (22) of the pliers (10) comprises three plier jaws (16, 18, 20), which are flexibly connected to the plier limbs (12, 14).

6. Pliers according to claim 1 or 5, **characterized in that** the plier head (22) of the pliers (10) comprising three plier jaws (16, 18, 20) is flexibly connected to the plier limbs (12, 14) by a connecting rod (24), connection joints (26, 28, 30, 32) guide rail (56), pivot points (52, 64, 66) and/or wheels (58, 62).

7. Pliers according to one or more of the preceding claims, **characterized in that** a cutting mechanism (40) is arranged in the capturing unit (36) of the second plier jaw (16).

8. Pliers according to claim 7, **characterized in that** the second plier jaw (16), in which the cutting mechanism (40) is arranged, comprises openings (38).

9. Pliers according to claim 7, **characterized in that** the second and the third plier jaws (16, 20) interact via a lever action to sever the piece of chocolate in the capturing unit (36) during pressing together of the plier limbs (12, 14).

10. Pliers according to claim 6 or 9, **characterized in that** the extrusion punch (42) and the cutting mechanism (40) interact to sever the piece of chocolate in the capturing unit (36).

11. Pliers according to one or more of the preceding claims, **characterized in that** the capturing unit (36) has a form corresponding to the severed piece of chocolate, and the extrusion punch (42) has a form corresponding to the capturing unit (36).

12. Pliers according to one or more of the preceding claims for severing and/or dividing pieces of chocolate, in particular quasi prism-shaped pieces of chocolate of Toblerone, **characterized in that** the plier head (22) is modularly designed, comprises a passively configured plier jaw (16) and one or two actively configured plier jaws (18, 20), wherein the plier jaws (18, 20) are interchangeable.

13. Kit for pliers according to one or more of the preceding claims for severing and/or dividing pieces of chocolate, in particular quasi prism-shaped pieces of chocolate of Toblerone, comprising a passively configured plier jaw (16) and two actively configured plier jaws (18, 20), wherein the plier jaws (18, 20) are configured to be interchangeable.

## Revendications

1. Pince destinée à séparer des morceaux de chocolat, en particulier des morceaux de chocolat quasi en forme de prisme d'un Toblerone, comprenant deux branches de pince (12, 14) actionnables manuellement et au moins une articulation de liaison (26, 66), **caractérisée en ce que** la pince (10) comprend une tête de pince (22) avec au moins trois becs de pince (16, 18, 20), le premier bec de pince (18) étant configuré activement et présentant un formage (34) pour la génération d'un point destiné à la rupture entre des morceaux de chocolat quasi en forme de prisme agencés les uns derrière les autres en un assemblage de chocolat et le second bec de pince (16) étant configuré passivement, comme pièce antagoniste au premier bec de pince (18), et le morceau de chocolat à séparer étant levé par la coopération des becs de pince (16, 18) de l'assemblage de chocolat restant et le second bec de pince (16) comportant une unité de réception (36) pour la réception du morceau de chocolat séparé.

2. Pince selon la revendication 1, **caractérisée en ce que** pour la pince (10) pour la séparation d'un morceau de chocolat, les branches de pince (12, 14) sont reliées entre elles par articulation dans l'articulation de liaison (26, 66).

3. Pince selon la revendication 1 ou 2, **caractérisée en ce que** les deux branches de pince (12, 14) sont reliées entre elles à au moins un élément de ressort (44), contre la force de ressort duquel la pince doit être déplacée et qui ouvre de nouveau la pince après la compression.

4. Pince selon la revendication 1 ou 3, **caractérisée en ce que** le troisième bec de pince (20) est réalisé comme un piston de presse (42) qui éjecte le morceau de chocolat séparé de la pince (10).

5. Pince selon la revendication 1 ou 4, **caractérisée en ce que** la tête de pince (22) de la pince (10) comporte trois becs de pince (16, 18, 20) qui sont reliés par articulation aux branches de pince (12, 14).

6. Pince selon la revendication 1 ou 5, **caractérisée en ce que** la tête de pince (22) comportant trois becs de pince (16, 18, 20) de la pince (10) est reliée par articulation par une tige de liaison (24), des articulations de liaison (26, 28, 30, 32), une coulisse (56), des points de rotation (52, 64, 66) et/ou des rouleaux (58, 62) aux branches de pince (12, 14).

7. Pince selon l'une ou plusieurs quelconques des revendications précédentes, **caractérisée en ce qu'**une unité de coupe (40) est agencée dans l'unité de réception (36) du second bec de pince (16).

8. Pince selon la revendication 7, **caractérisée en ce que** le second bec de pince (16), dans laquelle l'unité de coupe (40) est agencée, comporte des ouvertures (38).

9. Pince selon la revendication 7, **caractérisée en ce que** les deuxième et troisième becs de pince (16, 20) coopèrent par un mouvement de levier pour le détachage du morceau de chocolat se trouvant dans l'unité de réception (36) lors de la compression des branches de pince (12, 14).

10. Pince selon la revendication 6 ou 9, **caractérisée en ce que** le piston de presse (42) et l'unité de coupe (40) coopèrent pour le détachage du morceau de chocolat se trouvant dans l'unité de réception (36).

11. Pince selon l'une ou plusieurs quelconques des revendications précédentes, **caractérisée en ce que** l'unité de réception (36) présente une forme correspondante pour le morceau de chocolat séparé ainsi que le piston de presse (42) présente une forme correspondante pour l'unité de réception (36).

12. Pince selon l'une ou plusieurs quelconques des revendications précédentes pour la séparation et/ou le détachage de morceaux de chocolat, en particulier de morceaux de chocolat quasi en forme de prisme d'un Toblerone, **caractérisée en ce que** la tête de pince (22) est constituée de manière modulaire, comporte un bec de pince (16) configuré passivement et un ou deux becs de pince (18, 20) configurés activement, les becs de pince (18, 20) étant interchangeables.

13. Kit pour une pince selon l'une ou plusieurs quelconques des revendications précédentes, pour la séparation et/ou le détachage de morceaux de chocolats, en particulier de morceaux de chocolat quasi en forme de prisme d'un Toblerone, comprenant un bec de pince (16) configuré passivement et deux becs de pince (18, 20) configurés activement, les becs de pince (18, 20) étant configurés de manière interchangeable.
